# EUROPEAN PATENT APPLICATION

(11) **EP 2 611 049 A1**
(43) Date of publication of application: **03.07.2013**
(21) Application number: 11306802.7
(22) Date of filing: 28.12.2011
(51) Int. Cl.: H04B 11/00

(54) **Sonic M2M (machine to machine) communication using mobile communication device as a proxy**

(71) Applicant: Distribeo, 75020 Paris (FR)
(72) Inventor: Perret, Jean, 75015 Paris (FR)
(74) Representative: Santarelli

(57) **Abstract**

The invention concerns a method for communicating between a local machine (1) and a back office server (4) using a mobile communication device (2) adapted for communicating with the back office server (4) through a network (3), the local machine (1) being adapted for broadcasting messages over the air, the method comprising the following steps:
- the local machine (1) broadcasts a sonic signal over the air, said sonic signal conveying a local message having a plurality of fields of data;
- the mobile communication device (2) receives the sonic signal through its microphone and demodulates it for extracting the fields of data of the local message;
- the mobile communication device (2) processes at least one field of data for at least obtaining a remote message to be transmitted to the back office server (4) through the network (3) and if necessary detects whether an event has to be triggered on the mobile communication device (2).

## Description

### FIELD OF THE INVENTION

The present invention relates to the field of machine to machine (M2M) communication in particular to machines which require sending data without a dedicated infrastructure.

### BACKGROUND OF THE INVENTION

Operators who have deployed a large number of machines like vending machines have to retrieve various information from these machines e.g., information relating to the maintenance, information relating to the use of the machine, location of the machines, etc.

A well-known solution is to provide the machine with light indicators, a control screen etc. for displaying maintenance information.

However, a problem is that this solution requires the operator to check periodically the machine at its location.

Another well-known solution is to connect each machine to a server through an already deployed cellular network, like the GSM network.

In this case, each machine has a GSM module for transmitting information to a back office server by means of SMS, then the back office server is able to process the received information.

However, such a solution is too expensive.

Therefore, there is a need for having an alternative solution for the communication between a machine and a server, avoiding the use of a dedicated infrastructure.

### SUMMARY OF THE INVENTION

An objective of the invention is to use a mobile terminal of a user as a proxy permitting communication between two machines without the use of dedicated infrastructure.

To this end, according to a first aspect, the invention proposes a method for communicating between a local machine and a back office server using a mobile communication device adapted for communicating with the back office server through a network, the local machine being adapted for broadcasting messages over the air, the method comprising the following steps:
- the local machine broadcasts a sonic signal over the air, said sonic signal conveying a local message having a plurality of fields of data;
- the mobile communication device receives the sonic signal through its microphone and demodulates it for extracting the fields of data of the local message;
- the mobile communication device processes at least one field of data for at least obtaining a remote message to be transmitted to the back office server through the network and if necessary detects whether an event has to be triggered on the mobile communication device.

The method according to the first aspect of the invention may have one of the following features:
- the mobile communication device transmits to the back office server, through the network, the remote message;
- the mobile communication device detects whether the user of the mobile communication device has made some relevant actions and brought additional data after the reception of the local message, the mobile communication device processing these additional data for including them to the remote message;
- the sonic signal is an ultrasonic signal preferably sent using a frequency at least equal to 18.5 kHz; or watermarked in an audible signal broadcasted by the local machine;
- for receiving the sonic signal, the mobile communication device switches on its microphone periodically or permanently;
- the local message contains a field of data relating to a compensation offer and wherein the processing of this field triggers a display of the compensation offer on a screen of the mobile communication device;
- the local message contains a field of data relating to a localization of the mobile communication device and wherein the processing of this field triggers a display of said localization on a screen of the mobile communication device or store those information in the memory of the mobile communication device;
- the local message contains a field of data relating to the maintenance of the local machine;
- the field of data relating to the maintenance of the local machine is encrypted so that only the back office server is able to decode it;
- the local message contains a field of data which is a cryptographic nonce for authenticating the presence of a mobile communication device at a given time;
- the cryptographic nonce is encrypted so that only the back office server is able to authenticate the message and guarantee its non-repudiation;
- the local machine broadcasts the sonic signal continuously or periodically;
- the local message contains a field of data relating to time-varying data so that the back office server prevents hacking by comparing the remote message with the previously received remote messages;
- the local message contains a field of data relating to the authentication of data of the local message.

Also, according to a second aspect, the invention proposes a communication system comprising at least one mobile communication device; a local machine; a network; a back office server; the communication system being adapted for carrying out the method according the first aspect of the invention.

By proposing compensation offers to the user, the latter is encouraged to have a mobile communication device wherein the software is loaded.

Also, in the case where the software is an application that can be launched by a user, the latter is encouraged to launch the software.

Thus, the user offers his mobile communication device as a proxy for the emission of information related to the local machine to a back office server without having any infrastructure dedicated to do that.

Furthermore, by using a sonic signal, the energy consumption of the local machine is low.

Also, by using an ultrasonic signal, the signal cannot be heard by the user and does not disturb the user.

And according to a third aspect, the invention proposes a method for localizing the mobile communication device using the signal received from the local machine.

This localization is useful when traditional positioning systems do not work in particular in indoor environment.

### BRIEF DESCRIPTION OF THE DRAWINGS

Other features and advantages of the invention will appear in the following description. Embodiments of the invention will be described with reference to the drawings, in which:
- Figure 1 illustrates a system of communication according to an embodiment of the invention;
- Figure 2 illustrates steps of a method of communication according to an embodiment of the invention;
- Figure 3 illustrates a structure of a local message implemented in an embodiment of the invention;
- Figure 4 illustrates steps of a method for localizing a mobile communication device according to an embodiment of the invention.

### DETAILED DESCRIPTION OF THE INVENTION

### System of communication

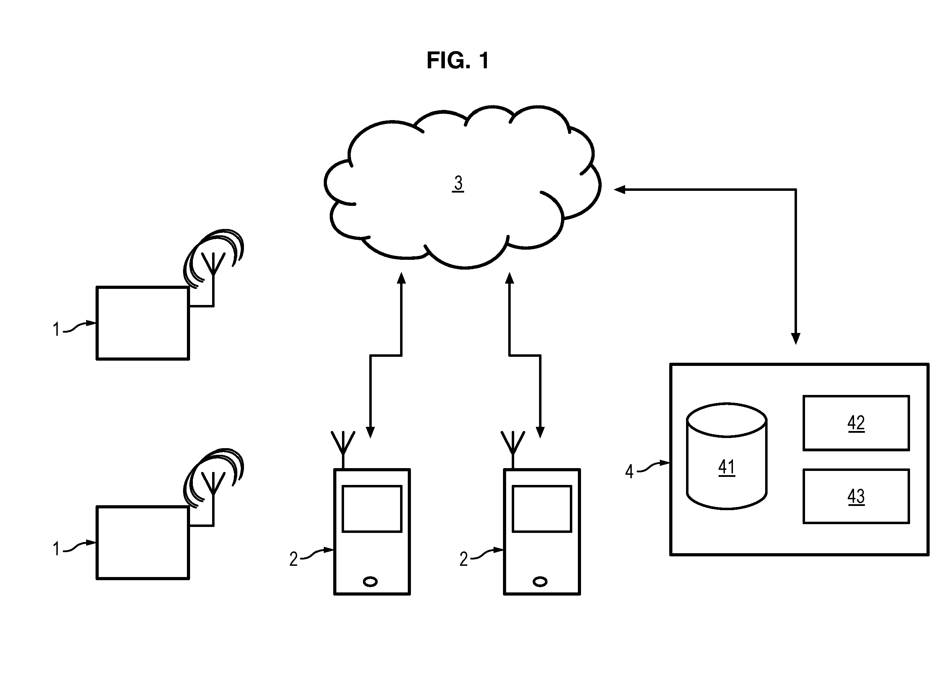

Referring to Figure 1 a system of communication according to an embodiment of the invention comprises: a local machine 1; a network 3; at least one mobile communication device 2 connected to the network 3; and a back office server 4 connected to the network 3.

The local machine 1 is preferably adapted for delivering compensation offers to users. The local machine 1 may be for instance a vending machine or a box placed in a store (for instance in the entrance or in a specific store department).

The mobile communication device 2 comprises an interface for communicating with the back office server 4 through the network 3. It also comprises a user interface for interaction between the mobile communication device 2 and the user if needed, a screen, a microphone, a memory and a processor.

The local machine 1 comprises a sonic transmitter for sending over the air a sonic signal, this sonic signal conveys a local message relating to various data (the various data will be described in the following).

The sonic signal preferably sounds inaudible to humans but detectable by the microphone of the mobile communication device 2. The ultrasounds are one of these types of sounds.

An example of ultra-sonic sound is a sound at a frequency at least equal to 18.5 kHz. Therefore, the sonic signal is sent at a frequency at least equal to 18.5 kHz.

Alternatively, the sonic signal is audible to humans, the local message being encoded in the audible sonic signal in a form of a watermark.

The memory of the communication device 2 contains a software dedicated for processing the local message and for managing the compensation offers if needed.

By a "compensation offer" we mean a reward that can be offered to a user (for instance a customer) such as a price reduction related to a product that is in a store wherein the local machine 1 is placed or to a product that is distributed by the vending machine. We also mean by "compensation offer" information to the user for rewarding him for using its mobile communication device with the software and/or offering him a service.

The reward may also not be directly delivered by the local machine 1. In particular, the local machine 1 may deliver a link for downloading a file (corresponding for instance to music, game, video, etc.) on the memory of the mobile communication device 2.

In this case, since the data rate using sonic signals is not sufficient enough for transmitting a large amount of data, the data corresponding to the file are sent by the back office server 4 to the mobile communication device 2 through the network 3. The data rate at the local machine 1 is for instance 500 bits/s.

The network 3 may be a wireless network such as a WiFi network, a WiMax network, a cellular network (3G or GSM network). The network may also be bridged to the Internet network for reaching the back office server 4.

The back office server 4 comprises a database 41 wherein various information about the local machine 1 are stored, a memory 42 for storing received data and a processor 43 for processing, if necessary, the received data.

### Method for communicating between the local machine and the back office server

The method of the invention is based on the fact that the local machine 1 may offer compensation offers to a user if the latter uses his mobile communication device 2 nearby the local machine 1.

In particular, the user may then receive compensation offers by means of the software loaded in its mobile communication device 2.

Thus, by encouraging the user to have its mobile communication device 2 nearby the local machine 1, this software may be used for sending data to the back office server 4 without disturbing the user.

We now describe the steps implemented in a method for communicating between a local machine 1 and a back office server 4 using a mobile communication device 2 according to an embodiment of the invention.

The method requires the software to be running on the mobile communication device 2.

The method therefore comprises a step of launching S1 the software.

The software may be launched either manually by a user or automatically, and may be running on the mobile communication device 2 as a background or foreground task.

A local machine 1 broadcasts S2, periodically or permanently, a sonic signal over the air, the sonic signal conveying a local message having a plurality of fields of data.

In case where the sonic signal is broadcasted periodically, the power consumption of the local machine 1 is lower than a continuous transmission.

The local message is broadcasted over the air using the sonic signal and preferably using an inaudible signal to humans and more preferably using an ultrasonic signal at a frequency at least equal to 18.5 kHz.

The software loaded in the mobile communications device permits the mobile communication device 2 to receive the sonic signal broadcasted by the local machine 1.

To this end, the mobile communication device 2 switches on S3 its microphone permanently or periodically.

One can note that the step according to which the mobile communication device 2 switches S3 on its microphone may be implemented before the step according to which the local machine 1 broadcasts S2 the local message.

If the mobile communication device 2 is nearby the local machine 1, the mobile communication device 2 receives S4 the sonic signal through its microphone.

Once the mobile communication device 2 has received S4 the sonic signal, the mobile communication device 2 demodulates S5 it for extracting the fields of data of the local message.

Then, the mobile communication device 2 processes S6 at least one field of data for obtaining a remote message to be transmitted to the back office server 4 through the network 3.

In this case this step comprises the modulation of the fields of data of the local message to be sent to the back office server 4 through the network 3.

One can note that it is not necessary to send all the fields of data of the local message to the back office server 4 by means of the remote message.

Alternatively or complementary, the mobile device 2 processes S6 at least one field of data for detecting whether an event has to be triggered on the mobile communication device 2.

By "event" we mean a display on the screen, a vibration or a ring of the mobile communication device 2 and/or a user interaction. As a consequence, the user may add additional data after the reception of the local message. Those data result in the interaction of the user.

If an event is detected, the mobile communication device 2, a display and/or user interaction occur S7.

Also, the additional data brought by the user may be processed S6 along with the data of the local message and included in the remote message.

After the remote message is obtained, once the mobile communication device 2 is connected to the network 3 (i.e., within the range of the network 3), the mobile communication transmits S8 the remote message to the back office server 4.

The step according to which the mobile communication device 2 transmits S8 the remote message to the back office server 4 may occur immediately after the remote message is obtained, if the mobile communication device 2 is connected to the network 3.

Once the back office server 4 has received S8 the remote message, the processor of the back office server 4 processes S9 the data contained in the remote message.

The processing S9 of the remote message comprises the demodulation of the message for extracting the message.

The processing S9 by the back office server 4 may also comprise the authentication of the remote message to verify if it is coming from the local machine 1 that he knows and if it contains data relating to a compensation offer.

Also the processing S10 by the back office server 4 may comprise the processing of the data relating to the maintenance of the local machine 1 for verifying if the local machine 1 needs servicing.

Additionally, if the remote message contains data relating to an offer, the back office server 4 may send S11 a return message to the mobile communication device 2. The return message contains data for validating the compensation offer.

### Local message

The local message is preferably encrypted so that, at the mobile communication device 2 level only, the software is able to decode it.

The local message may contain a field of data relating to a compensation offer. In this case, the processing of the local message triggers an event which is for instance a display, on a screen of the mobile communication device 2, of the available compensation offer.

Preferably, in order to prevent hacking, the local message contains a field of data relating to time-varying data so that the back office server 4 compares the received remote message with the previously received.

Alternatively or additionally, the local message contains a field of data related to the maintenance of the local machine.

In order to prevent the user to access or alter the data relating to the local machine 1, an additional encryption is performed to this field of data. In particular, this field of data is encrypted so that only the back office server 4 is able to decode it. Therefore, the field of data relating to the local machine 1 is preferably encrypted twice.

The data relating to the maintenance may correspond to:
- a status of a battery, if the local box is powered by a battery;
- a status of a vending machine: the vending machine needs to be loaded by some products; etc.

It can be understood that the data relating to the maintenance relates to any information that can be used for repairing a component of the local machine and more generally to any information for noticing an operator that the local machine needs servicing, the operator accessing to these information by the back office server 4.

The local message may contain data relating to the authentication of the local message.

These data are in a form of a field of data which is a cryptographic nonce for authenticating the presence of a mobile communication device 2 at a given time.

In this case, the cryptographic nonce is encrypted so that only the back office server 4 is able to authenticate a remote message coming from the local machine 1 and guarantee its non-repudiation.

Alternatively, the data relating to the authentication of the local message may be for instance the location of the local machine 1 and/or an identifier of the local machine 1 and/or a timestamp produced at the time of the transmission of the local message.

Additionally, the data may be associated to the context of use of the local machine 1. For instance, the location context may be associated or sent along with the other data so that an operator may determine the use of the local machine 1 by analyzing several data of this type.

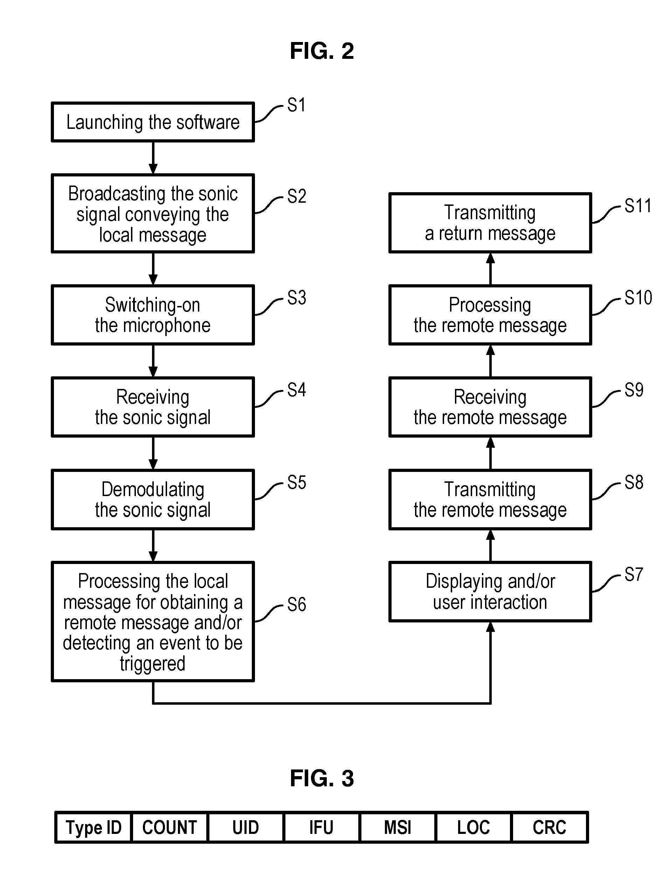

In a preferred embodiment, the local message contains seven fields (see Figure 3). These fields are empty if not used or contain the following fields:
- "Type ID": this field contains data for identifying the type of local machine 1.
- "COUNT": this field contains data for authenticating the message sent to the back office. A counter is regularly incremented according to a random progression (for instance once within twelve hours) or according to a deterministic progression. By comparing this field coming from several local messages, the back office server 4 may verify the correct chronology of the messages.
- "UID" (Unique ID): this field contains a unique number corresponding to the local machine 1.
- "IFU" (Information For User): this field contains data relating to a compensation offer.
- "MSI" (Machine State Information): this field contains data relating to the maintenance of the local machine 1 or a cryptographic nonce used to sign a communication.
- "LOC" (LOCation): this field contains data relating to the location of the local machine 1. In this case, the software is able to display the localization of the local machine 1 on the screen of the mobile communication device 2 so that the user may be informed about the place where the local machine 1 is. An example may be the sending of a map of a store wherein the local machine is installed.
- "CRC" (Cyclic Redundancy Check): this field contains data for detecting errors which may occur during the sending of the message.

Alternatively, fields "COUNT", "MSI" are encrypted twice: The first encryption is made so that the software loaded in the mobile communication device 2 is able to decode the data, the second encryption is made so that the back office server 4 is able to decode the data.

In case where the field MSI contains a cryptographic nonce instead of data relating to the maintenance of the local machine 1, this cryptographic nonce is used for the authentication of the message.

A local machine may broadcast several different local messages. For instance, one message may correspond to one software application. It may send the messages one after the other such that a software application will decode and process the message if and only if the message is intended to it. It may also send all the messages all together if the modulations use different frequencies. It may also send the message depending on the communication device near to it. The detection of the type of the application software of the nearest mobile communication device may be performed using a piezo electric receiver. The speakers of the mobile communication device may be used to transmit an ultrasound signal, the local machine receives the signal, processes it, and send back the message corresponding to the particular application type.

### Example of application of the method for communicating between the local machine and the back office server

We now describe an example of implementation of the method of the invention.

We consider a vending machine delivering drinks.

The user knows that the machine may deliver a price reduction if he uses the software on his mobile communication device.

He launches the software nearby the local machine and receives the local message containing data about the price reductions, the status of the machine and the location of the machine.

Obviously only the information relating to the price reductions are displayed to the user. The status of the machine and its location are sent to the back office server 4 according to the method described above.

The back office server 4 authenticates the remote message and processes the data.

If the vending machine needs servicing, the back office server 4 is able by means of the received message to determine the location of the vending machine and the problem.

If the message contains a price reduction and if the message is authenticated, the back office server 4 may send a message to the mobile communication device for indicating that the price reduction is granted.

The user may use the price reduction for a drink.

Therefore, the operator of the vending machine has retrieved the status of the machine and may send a technician for servicing the vending machine only if necessary and the user has obtained a price reduction on his drink.

### Method for localizing the mobile communication device 2

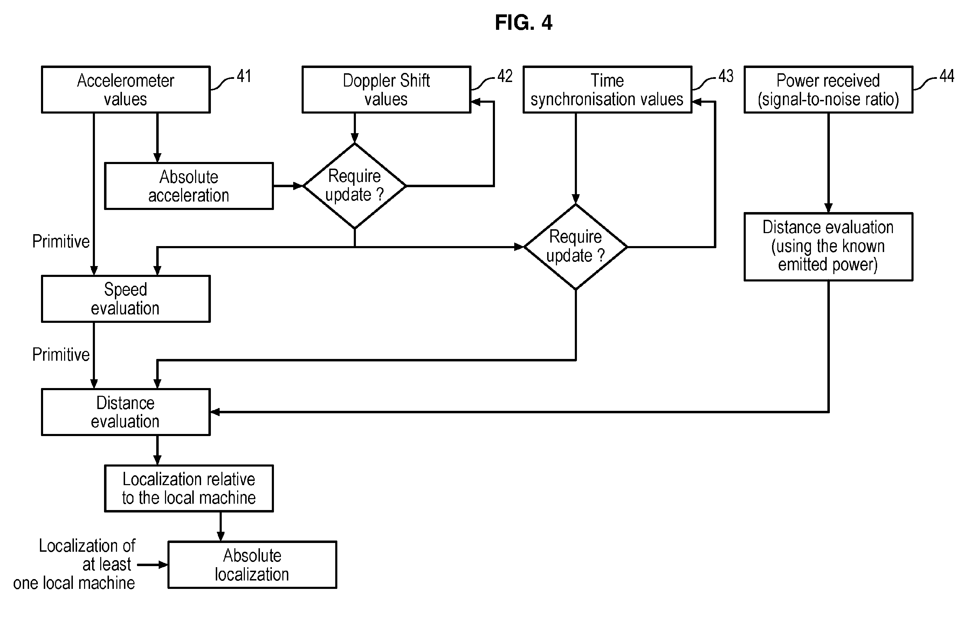

The system as described above may be used for localizing the mobile communication device 2. In this case, the signal broadcasted by the local machine 1 is used for determining a localization of the mobile communication device 2 relatively to the local machine 1 and knowing the localization of the local machine 1 the absolute localization of the mobile communication device 2 is determined. Figure 4 illustrates the steps for localizing the mobile communication device.

Obtaining the position of the mobile communication device 2 may be useful since traditional positioning systems (such as GPS) do not work in an indoor environment where the local machine 1 may be installed. Moreover, since the signal is authenticated by features of the local message, the method provides a reliable and safe way to obtain the absolute localization of the mobile communication device 2.

### Localization of the local machine 1

The localization of the local machine 1 may be broadcasted by the local machine 1 itself. Indeed, as already described the local message broadcasted by the local machine may contain a field of data relating to the localization of the local machine 1.

Alternatively, the localization of the local machine 1 may also be known by the mobile communication device 2 if the latter has already received a sonic signal from this local machine 1, for instance.

### Localization of the mobile communication device 2 relatively to the local machine 1

The localization of the mobile communication device 2 relatively to the local machine 1 may be determined during the demodulation of the sonic signal.

We consider a sonic signal composed of several frequency components. Those frequencies are used to demodulate the signal.

In a preferred embodiment, the frequency may shift around one or several carrier frequencies (FSK: Frequency Shift Keying), or the carrier signal may alternate between presence and absence of the carrier (OOK: On/Off Keying), or the signal may be composed of several carriers, (multifrequency carrier signaling).

When the mobile communication device 2 receives the sonic signal, the mobile communication device 2 may be moving. In such a case, a strong Doppler effect may occur.

For instance, a mobile communication device 2 moving at a speed of 1 m/s means a Doppler shift of about 50 Hz (for a sonic signal at a frequency around 2000 Hz).

Thus, before the demodulation as such, the software, at the mobile communication device 2, obtains this Doppler shift in order to demodulate the sonic signal more easily.

The Doppler shift may be obtained by means of well-known algorithms such as Fast Fourier Transform, auto-convolution, zero-crossing, Goerzel algorithm, MESA, etc.) not only at the expected carrier frequency (the frequency conveying the sonic signal) but also around this carrier (up to a Doppler shift corresponding to a speed considered as reasonable). As these algorithms are known in the art, for the sake of clarity, the description of these algorithms will be omitted.

To confirm the order of magnitude of this value, we use values obtained from an accelerometer (if the mobile communication device 2 comprising such an accelerometer).

Taking the derivation of the Doppler shift and comparing it to the values from the accelerometer, a systematic major difference may indicate a false positive or cheating from a user (e.g., in playing back a signal recorded in a different condition). In both cases, the software should not consider the signal as characteristic of a local machine sending a useful signal.

As known, the first step of demodulation is time-synchronization. This step is critical and requires a lot of computation in a low "signal-to-noise-ratio" environment.

One can note that the demodulation may take some time (up to some seconds). If the conditions stay the same during all the demodulation phase, re-synchronization is not mandatory.

However, if the distance is varying (Doppler shift different from zero), the Doppler shift is used to evaluate how often a re-synchronization has to take place. An empiric rule is provided in the software for making a correspondence between the periodicity of re-synchronization and Doppler shift.

Also, if the accelerometer provides a norm (norm 2 over the three coordinates) different from zero, it means that the Doppler shift will evolve. A second empiric rule is given to make a correspondence between the periodicity of new computation of the Doppler shift and the absolute acceleration.

The time-synchronization values permit to evaluate the evolution of the distance over the demodulation time since the propagation speed of a sonic signal is quite low (and well known). Those time-synchronization values correspond to the time shift observed from a sample demodulated to another. By instance, the raising edge of the magnitude of a frequency over time may be used for synchronization. A time shift of this value from sample to sample lets us know the distance (dividing the time shift by the sonic speed).

The Doppler shift values permit to evaluate the speed of the mobile communication device 2 between the broadcasting of the sonic signal and the reception of the sonic signal: by taking the primitive once, we obtain an evaluation of the distance between the local machine 1 and the mobile communication device 2.

The accelerometer values permit to evaluate the acceleration of the mobile communication device 2 between the broadcasting of the sonic signal and the reception of the sonic signal: by taking the primitive twice, we obtain an evaluation of the distance between the local machine 1 and the mobile communication device 2.

As a consequence, during the demodulation we may obtain a three-uplet vector (over time) "time-synchronization/Doppler-shift/acceleration over the three-coordinates".

Also it is possible to evaluate coarsely the distance from the received power of the sonic signal (using preferably the signal-to-noise ratio) (or from various local machine if more than one) using triangulation (or even triangularisation if the local machine's emitter 1 is very directive. In such a case, the angle between the emitters and the receiver are computed, and the position is found). The relative power broadcasted from each local machine is supposed to be the same, if not, the relative power emitted is sent as a data with the local message or previously configured.

Thus, the localization of the mobile communication 2 device relatively to the local machine 1 may be determined from
- the distance evaluated from the accelerometer values 41; and/or
- the distance evaluated from the Doppler shift values 42; and/or
- the distance evaluated from time synchronization values 43; and/or
- the distance evaluated from the power received 44.

In a preferred embodiment a combination of the four above values are used.

One can note that in case where, we combine at least two above distances, we have to verify the integrity of the values from which the distance is obtained.

In particular, the integrity of the values is verified by verifying the dispersion of the values over time (such as the variance).

Then an empiric rule is used to establish a weight function giving to each value a relative importance in the computation of the distance.

In case where the four values of the distance are used, the primitive of the acceleration as well as the Doppler shift is used to give precise speed estimation (in three dimensions) and the primitive of this speed is used with the time-synchronization and the received power to evaluate the distance.

Finally, knowing the position of the local machine 1 and the position relatively to this machine, we determine absolute localization of the mobile communication device 2.

In addition, the method may be implemented over several local machines 1 in the same time if they are close enough. In that case, the absolute localizations of the mobile communication device 2 obtained are averaged over all the values obtained, but each value is weighted accordingly to the signal power received (the closest local machine being considered as more reliable to obtain the localization).

## Claims

1. A method for communicating between a local machine (1) and a back office server (4) using a mobile communication device (2) adapted for communicating with the back office server (4) through a network (3), the local machine (1) being adapted for broadcasting messages over the air, the method comprising the following steps:
- the local machine (1) broadcasts a sonic signal over the air, said sonic signal conveying a local message having a plurality of fields of data;
- the mobile communication device (2) receives the sonic signal through its microphone and demodulates it for extracting the fields of data of the local message;
- the mobile communication device (2) processes at least one field of data for at least obtaining a remote message to be transmitted to the back office server (4) through the network (3) and if necessary detects whether an event has to be triggered on the mobile communication device (2).

2. The method according to the preceding claim, wherein the mobile communication device (2) transmits to the back office server (4), through the network (3), the remote message.

3. The method according to one of the preceding claims, wherein the mobile communication device (2) detects whether the user of the mobile communication device (2) has made some relevant actions and brought additional data after the reception of the local message, the mobile communication device (2) processing these additional data for including them to the remote message.

4. The method according to one of the preceding claims, wherein the sonic signal is:
- an ultrasonic signal preferably sent using a frequency at least equal to 18.5 kHz; or
- watermarked in an audible signal broadcasted by the local machine (1).

5. The method according to one of the preceding claims, wherein for receiving the sonic signal, the mobile communication device (2) switches on its microphone periodically or permanently.

6. The method according to one of the preceding claims, wherein the local message contains a field of data relating to a compensation offer and wherein the processing of this field triggers a display of the compensation offer on a screen of the mobile communication device (2).

7. The method according to one of the preceding claims, wherein the local message contains a field of data relating to a localization of the mobile communication device (2) and wherein the processing of this field triggers a display of said localization on a screen of the mobile communication device (2) or store those information in the memory of the mobile communication device.

8. The method according to one of the preceding claims, wherein the local message contains a field of data relating to the maintenance of the local machine (1).

9. The method according to Claim 8, wherein the field of data relating to the maintenance of the local machine (1) is encrypted so that only the back office server (4) is able to decode it.

10. The method according to one of the preceding claims, wherein the local message contains a field of data which is a cryptographic nonce for authenticating the presence of a mobile communication device (2) at a given time.

11. The method according to the preceding claim, wherein the cryptographic nonce is encrypted so that only the back office server (4) is able to authenticate the message and guarantee its non-repudiation.

12. The method according to one of the preceding claims, wherein the local machine (1) broadcasts the sonic signal continuously or periodically.

13. The method according to one of the preceding claims, wherein the local message contains a field of data relating to time-varying data so that the back office server (4) prevents hacking by comparing the remote message with the previously received remote messages.

14. The method according to one of the preceding claims, wherein the local message contains a field of data relating to the authentication of data of the local message.

15. A communication system comprising at least one mobile communication device (2); a local machine (1); a network (3); a back office server (4); the communication system being adapted for carrying out the method according to one of the preceding claims.
